# EUROPEAN PATENT APPLICATION

(11) **EP 0 762 085 A1**
(43) Date of publication of application: **12.03.1997**
(21) Application number: 96202266.1
(22) Date of filing: 12.08.1996
(51) Int. Cl.: G01F 1/58

(54) **Method and device for measuring a flow rate of a flowing medium**

(30) Priority: 17.08.1995 NL 1001003; 29.04.1996 NL 1002970
(71) Applicant: Bruinink, Freddy, 3038 VL Rotterdam (NL)
(72) Inventor: Bruinink, Freddy, 3038 VL Rotterdam (NL)
(74) Representative: Bartelds, Erik

(57) **Abstract**

The invention relates to a method for measuring the flow rate of a medium flowing through a conduit by applying an alternating magnetic field transversely of the flow direction of the medium and measuring a current induced by the medium flowing through the magnetic field. The alternating magnetic field is herein applied by moving, for instance rotating or moving reciprocally, a permanent magnet relative to the conduit.

The invention also relates to a device for measuring the flow rate of a flowing medium, provided with a conduit part through which the medium can flow, a magnet arranged in the vicinity of the conduit part for generating in the conduit part an alternating magnetic field directed transversely of the longitudinal axis thereof, and means for detecting a current induced by the medium, wherein as magnet is used a permanent magnet which is arranged movably relative to the conduit part.

## Description

The invention relates to a method for measuring the flow rate of a medium flowing through a conduit by applying an alternating magnetic field substantially transversely of the flow direction of the medium and measuring a current induced by the medium flowing through the magnetic field.

Such a method is known, for instance from the European patent specification 0 309 932. In the method described herein for measuring the flow rate of a medium flowing through a conduit, a magnetic field is applied across the conduit by energizing one or more electromagnets. When a conductor, in the case of a flow meter therefore the conducting liquid, flows through this magnetic field, in accordance with Faraday's law an electrical current is generated which is directed perpendicularly of both the direction of the magnetic field and the direction of movement of the conductor, and the magnitude of which is related to the strength of the magnetic field and the speed of movement of the conductor, thus the flow speed of the medium. In order to prevent the medium from becoming permanently magnetized by flowing through a magnetic field with constant polarization direction, this latter is varied. For this purpose the electromagnet is energized with an alternating current whereby the direction of the magnetic field is thus periodically reversed.

A drawback to this manner of measuring the flow rate is that in order to generate a detectable induced current, use must be made in the case of a relatively weakly conductive flowing medium of a relatively strong magnetic field. When this magnetic field is generated by means of an electromagnet relatively large coils with a high electrical power are required. Such relatively large electromagnets as well as the electronics required to control the comparatively large alternating currents are costly, whereby this measuring method can only be used for large-scale applications, such as for instance in the process industry.

For smaller-scale applications, for instance a bar tap installation in the catering sector, use has heretofore often been made to measure the flow rate of blade wheels or turbines placed in the flowing medium, the rotation speed of which then formed a measure for the flow speed of the medium. This manner of measuring the flow rate has the drawback however that such a conduit with a turbine meter can only be cleaned with great difficulty, while there is the additional danger of the meter jamming, which can result in blockage of the conduit, while the sealing and mounting of such a meter have also been found to be problematic.

The invention therefore has for its object to provide a method of the above stated type with which a relatively small flow rate can also be measured economically. According to the invention this is achieved in that the alternating magnetic field is applied by moving at least one permanent magnet relative to the conduit. By making use of a movable permanent magnet instead of an electromagnet powered with alternating current an alternating magnetic field of sufficient strength can be generated at comparatively low cost.

Preferably applied variants of the method according to the invention form the subject-matter of the dependent claims 2-5.

The invention also relates to a flow meter with which the above described measuring method can be performed. Such a flow meter is provided with a conduit part through which the medium can flow, at least one magnet arranged in the vicinity of the conduit part for generating in the conduit part an alternating magnetic field directed substantially transversely of the longitudinal axis of the conduit part, and means connected to the conduit part for detecting a current induced by the medium flowing through the magnetic field and is characterized according to the invention in that the magnet is a permanent magnet which is arranged movably relative to the conduit part.

Preferred embodiments of the flow meter according to the invention are described in the dependent claims 7-13. The invention will now be elucidated on the basis of an embodiment, wherein reference is made to the annexed drawing, in which:

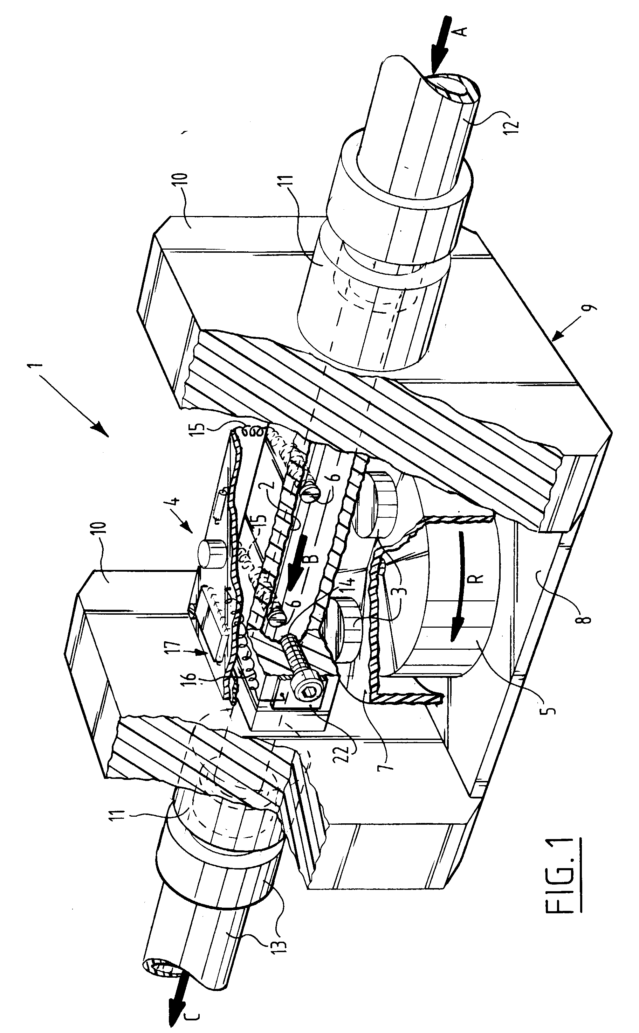

fig. 1 shows a partly cut away perspective view of a preferred embodiment of the flow rate measuring device according to the invention, and
fig. 2 shows a schematic view of a measurement signal produced by such a flow meter.

A device 1 for measuring a flow rate of a medium flowing as according to arrows A, B, C is provided with a conduit part 2 through which the medium can flow, two magnets 3 arranged in the vicinity of the conduit part 2 for generating in conduit part 2 a magnetic field directed substantially transversely of the longitudinal axis of conduit part 2, and means 4 connected to conduit part 2 and adapted to detect an induced current generated by the medium flowing through the magnetic field.

The magnets 3 are adapted to generate an alternating magnetic field. To this end they are embodied as permanent magnets which are movable relative to conduit part 2. The permanent magnets 3, which have a differing polarity and thus generate magnetic fields in different directions, are arranged for this purpose on a turntable 7 which is driven rotatably in the direction of arrow R by a drive unit, for instance an electric motor 5. This latter can be controlled so that the rotation speed thereof, and therewith the frequency of alternation of the magnetic field, can be adjusted. Electric motor 5 is arranged on a base 8 of a U-shaped frame 9, the side walls 10 of which support conduit part 2. The latter is provided on its outer ends 11 with connecting means, for instance in the form of a screw thread or bayonet fitting, for coupling of the flow meter 1 to adjoining conduit parts 12 and 13.

As a result of the rotation movement of turntable 7 with the differently directed magnets 3 arranged thereon, a repeatedly alternating magnetic field is generated in conduit part 2. When now a conducting medium flows through conduit part 2, an electrical current will be generated therein in accordance with Faraday's law which is perpendicular to both the direction of the magnetic field and the direction of displacement of the conducting medium. The magnitude of this induced current is related to the strength of the magnetic field and the speed of movement of the conductor, thus the flow speed of the conducting medium. A measure for the flow speed is obtained by measuring this induced current, since the strength of the magnetic field is determined by the strength of the magnets and their rotation speed and is thus in principle known.

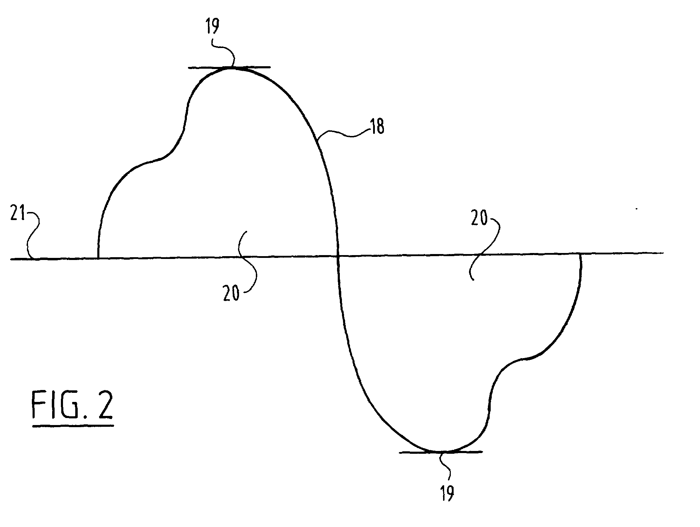

The current detecting means 4 comprise for this purpose in the case shown two electrode pairs 6, 14 which are arranged on either side of conduit part 2 and which are connected via conductors 15, 16 and 22, shown here schematically, to a processing unit 17 which is shown here as a printed circuit board filled with electronic components. In this processing unit 17 the induced current detected by the electrodes 6, 14, which can show a progress as depicted by the curve 18 in fig. 2, is converted into a value of the flow speed of the medium in conduit part 2. Use is made for this conversion of the knowledge that the magnitude of the detected induced current, which is illustrated by the peak value 19 and the effective area 20 enclosed by the curve 18 and the horizontal axis 21, is proportional to this flow speed. The processing unit 17 can therefore determine the flow speed from the detected induced current, wherein either use can be made of a direct calculation or the related value of the flow speed can be looked up in a measurement value table which is predetermined by calibration and can be stored in processing unit 17.

Although the invention is described above with reference to an embodiment of the flow meter wherein the permanent magnets are rotated relative to the conduit part, any other movement of these magnets which results in an alternating magnetic field being generated in the conduit part can of course also be used. Thus for instance a magnet could be reciprocally movable transversely of the longitudinal axis of the conduit part, while it is equally conceivable for a magnet to be arranged rotatably round the conduit part.

All that is important is that through movement of one or more permanent magnets relative to the conduit part an alternating magnetic field is generated therein without use having to be made herein of electromagnets powered by alternating current. A reliable flow meter can thus be formed at relatively low cost which is also very useful for measuring the flow speed of relatively poorly conductive liquids such as beer or soft drinks. Because moreover no components protrude into the conduit in the case of this flow meter, this meter does not represent an obstacle for instance during cleaning of the conduit, which is of great importance, particularly in the case of conduits for food products.

## Claims

1. Method for measuring the flow rate of a medium flowing through a conduit by applying an alternating magnetic field substantially transversely of the flow direction of the medium and measuring a current induced by the medium flowing through the magnetic field, **characterized in that** the alternating magnetic field is applied by moving at least one permanent magnet relative to the conduit.

2. Method as claimed in claim 1, **characterized in that** the movement of the magnet is controlled.

3. Method as claimed in claim 1 or 2, **characterized in that** the magnet is rotated relative to the conduit.

4. Method as claimed in claim 1 or 2, **characterized in that** the magnet is moved reciprocally relative to the conduit.

5. Method as claimed in any of the foregoing claims, **characterized in that** a number of differently oriented magnets are moved relative to the conduit.

6. Device (1) for measuring the flow rate of a flowing medium, provided with a conduit part (2) through which the medium can flow, at least one magnet (3) arranged in the vicinity of the conduit part (2) for generating in the conduit part (2) an alternating magnetic field directed substantially transversely of the longitudinal axis of the conduit part (2), and means (4) connected to the conduit part (2) for detecting a current induced by the medium flowing through the magnetic field, **characterized in that** the magnet (3) is a permanent magnet which is arranged movably relative to the conduit part (2).

7. Device (1) as claimed in claim 6, **characterized in that** the magnet (3) is connected drivably to a controllable motor (5).

8. Device (1) as claimed in claim 6 or 7, **characterized in that** the magnet (3) is arranged for rotation relative to the conduit part (2).

9. Device (1) as claimed in claim 6 or 7, **characterized in that** the magnet (3) is arranged for reciprocal movement relative to the conduit part (2).

10. Device (1) as claimed in any of the claims 6-9, **characterized by** a number of magnets (3) arranged distributed along the conduit part (2).

11. Device (1) as claimed in claim 10, **characterized in that** the magnets (3) are differently directed.

12. Device (1) as claimed in any of the claims 6-11, **characterized in that** the current detecting means (4) comprise at least two electrodes (6, 14) which are arranged on opposite sides of the conduit part (2) and each of which is manufactured at least partially of plastic.

13. Device (1) as claimed in claim 12, **characterized in that** at least one electrode (6, 14) comprises a part manufactured from an electrically conductive plastic, which part is cast into a wall of the conduit part (2) manufactured from a similar, non-conductive plastic.
